(19) Europäisches Patentamt
European Patent Office
Office européen des brevets

(11) **EP 3 201 609 B1**

(12) **FASCICULE DE BREVET EUROPEEN**

(45) Date de publication et mention de la délivrance du brevet:
**07.11.2018 Bulletin 2018/45**

(21) Numéro de dépôt: **15770915.5**

(22) Date de dépôt: **29.09.2015**

(51) Int Cl.:
*G01N 21/95* (2006.01)  *G01B 11/24* (2006.01)
*G01N 21/88* (2006.01)

(86) Numéro de dépôt international:
**PCT/EP2015/072364**

(87) Numéro de publication internationale:
**WO 2016/050735 (07.04.2016 Gazette 2016/14)**

(54) **PROCÉDÉ ET SYSTÈME D'INSPECTION DE PLAQUETTES POUR L'ÉLECTRONIQUE, L'OPTIQUE OU L'OPTOÉLECTRONIQUE**

VERFAHREN UND SYSTEM ZUR KONTROLLE VON WAFERN FÜR ELEKTRONIK, OPTIK UND OPTOELEKTRONIK

METHOD AND SYSTEM FOR INSPECTING WAFERS FOR ELECTRONICS, OPTICS OR OPTOELECTRONICS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2014 FR 1459172**

(43) Date de publication de la demande:
**09.08.2017 Bulletin 2017/32**

(73) Titulaire: **Unity Semiconductor**
**38330 Montbonnot Saint Martin (FR)**

(72) Inventeurs:
• **DURAND DE GEVIGNEY, Mayeul**
**38240 Meylan (FR)**
• **GASTALDO, Philippe**
**F-38530 Pontcharra (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**WO-A1-2009/112704   US-A- 4 030 830**
**US-A- 5 148 229**

• **FARMER, W., M.: "Measurement of Particle Size, Number Density, and Velocity Using a Laser Interferometer", APPLIED OPTICS, vol. 11, no. 11, novembre 1972 (1972-11), pages 2603-2612, XP002739830, cité dans la demande**
• **TANNER, L., H.: "A study of fringe clarity in laser interferometry and holography", JOURNAL OF SCIENTIFIC INSTRUMENTS (JOURNAL OFPHYSICS E), vol. 1, 1968, pages 517-522, XP002739831,**

## Description

### DOMAINE DE L'INVENTION

La présente invention concerne un procédé et un système d'inspection de plaquettes pour l'électronique, l'optique ou l'optoélectronique.

### ARRIERE PLAN DE L'INVENTION

Lors de la fabrication et l'utilisation de plaquettes (ou « wafers » selon la terminologie anglo-saxonne) pour l'électronique, l'optique ou l'optoélectronique, il est habituel de réaliser une inspection de la surface de chaque plaquette afin d'y détecter d'éventuels défauts.

En raison de la très faible taille des défauts à détecter, une inspection visuelle par un opérateur n'est pas suffisante.

Par ailleurs, l'inspection ne vise généralement pas uniquement à déceler la présence ou non de défauts, mais aussi à fournir des informations qualitatives et/ou quantitatives sur lesdits défauts, telles que leur localisation, leur taille et/ou leur nature, par exemple.

Des systèmes d'inspection ont donc été développés en vue de détecter des défauts de plus en plus petits et de fournir toutes informations requises sur la nature, la taille, la localisation, etc. desdits défauts.

Ces systèmes doivent en outre permettre une durée d'inspection de chaque plaquette qui soit suffisamment courte pour ne pas pénaliser les cadences de production.

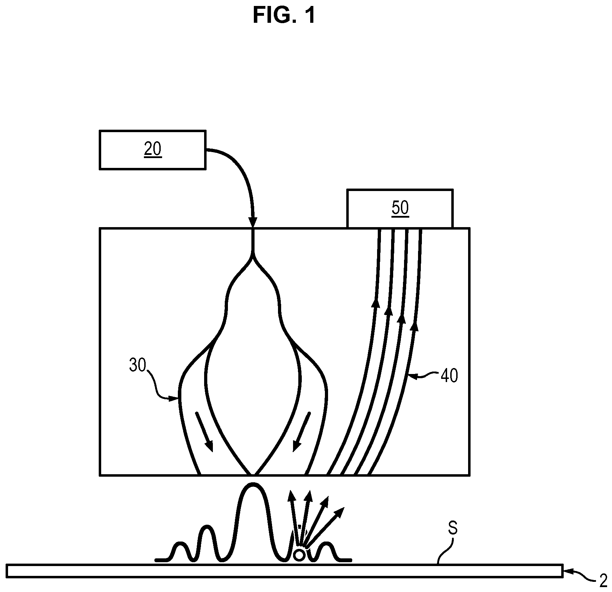

Le document WO 2009/112704 décrit un système d'inspection de plaquettes semiconductrices mettant en oeuvre la vélocimétrie laser à effet Doppler (LDV, acronyme du terme anglo-saxon « Laser Doppler Velocimetry »). Comme on peut le voir sur la figure 1, ce système comprend une source lumineuse 20 et un dispositif interférométrique 30 couplé à la source lumineuse agencé en regard de la surface S de la plaquette 2 à inspecter, qui est animée d'un mouvement. Ledit dispositif interférométrique comprend un guide de lumière dont l'entrée est couplée à la source lumineuse et comprenant deux branches pour diviser le faisceau issu de la source lumineuse en deux faisceaux incidents. A la sortie du guide de lumière, les deux branches sont orientées l'une par rapport à l'autre de sorte à former, à l'intersection entre les deux faisceaux, un volume de mesure comprenant une pluralité de franges parallèles. Le système comprend par ailleurs une fibre optique 40 agencée entre la surface de la plaquette et un module de détection 50, de sorte à guider vers le module de détection la lumière rétro-diffusée par la surface de la plaquette.

Le document WO 02/39099 décrit un autre système d'inspection de plaquettes semiconductrices reposant sur la vélocimétrie laser à effet Doppler.

La présence d'un défaut sur la surface de la plaquette se traduit, lorsque ce défaut traverse les franges d'interférences, par la diffusion d'une bouffée Doppler mesurée par le module de détection. Une bouffée Doppler est un signal présentant une double composante fréquentielle : une composante de fréquence basse, formant l'enveloppe du signal, correspondant à l'intensité lumineuse moyenne diffusée par le défaut, et une composante de fréquence haute, correspondant à la fréquence Doppler contenant l'information sur la vitesse du défaut. La fréquence Doppler $f_D$ est liée à la vitesse v de déplacement du défaut dans la direction perpendiculaire aux franges et à la distance $\Delta$ entre les franges d'interférences (ou distance interfranges) par la relation : $v = f * \Delta$.

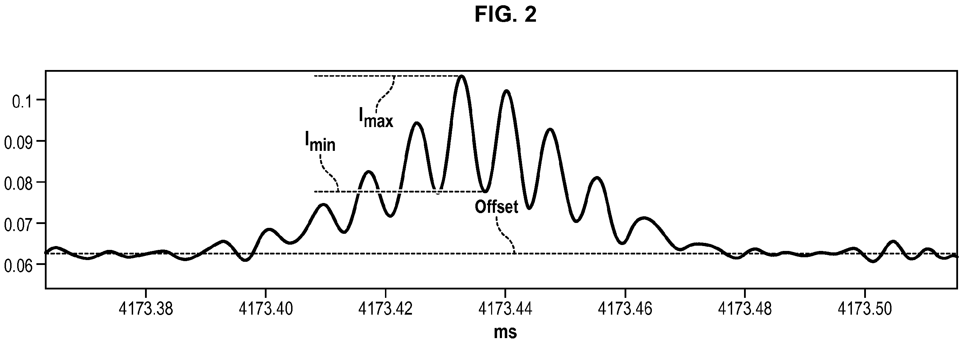

La figure 2 illustre une bouffée Doppler due au passage d'un défaut dans la zone d'interférences, exprimée sous la forme d'une tension électrique (en Volts) en sortie du module de détection en fonction du temps.

A partir d'une telle bouffée Doppler, on peut déterminer la taille des défauts détectés sur la surface de la plaquette.

On peut à cet égard se référer à la publication de W.M. Farmer intitulée « Measurement of Particle Size, Number Density, and Velocity Using a Laser Interferometer », qui présente un modèle de la visibilité d'une particule en fonction de la taille de la particule.

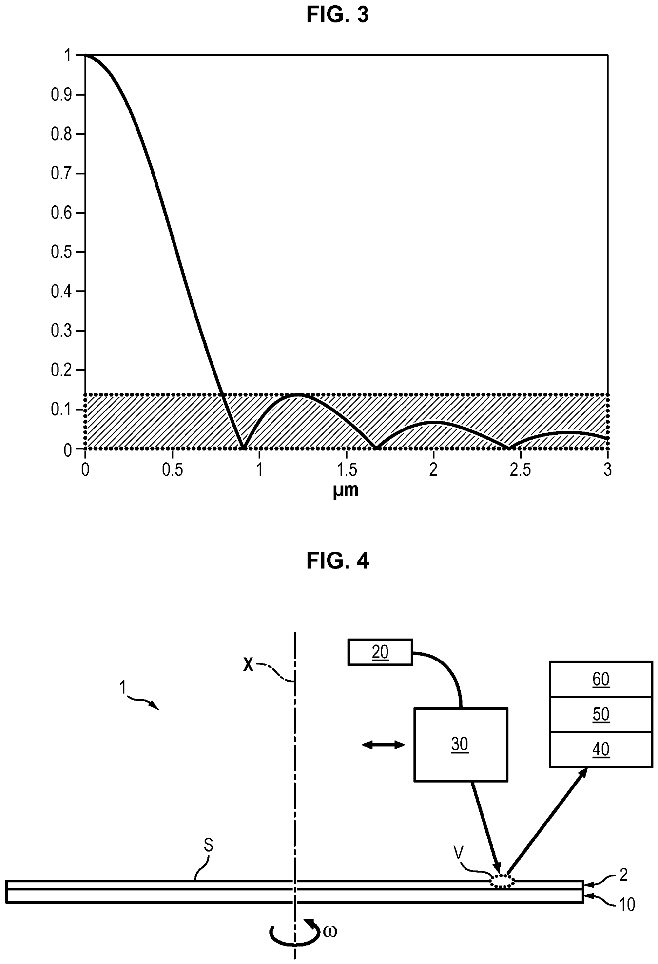

Ainsi, pour une figure de franges d'interférences données, la relation entre la taille d'un défaut assimilé à une sphère, qui est définie comme le diamètre de la sphère, et la visibilité déterminée selon la formule ci-dessus, est donnée par une courbe du type de celle illustrée sur la figure 3.

On observe que, pour une visibilité supérieure à 0,15, la courbe de la figure 3 fournit une unique taille de défaut correspondant à une valeur de visibilité donnée.

Cependant, pour une visibilité inférieure à 0,15, la courbe présente des rebonds, traduisant le fait qu'une même valeur de visibilité peut correspondre à plusieurs tailles de défauts. Ainsi, dans l'exemple de la figure 3, une visibilité de 0,1 correspond à trois rayons de sphère : 0,83 $\mu$m, 1,12 $\mu$m et 1,45 $\mu$m.

Dans un tel cas, il se pose donc le problème de déterminer, parmi ces différentes tailles possibles, la taille réelle du défaut présent sur la plaquette.

En particulier, cette technique ne permet pas de mesurer la taille de défauts dont les tailles sont très différentes. En effet, comme on le voit sur la figure 3, il n'est pas possible de déterminer la taille de défauts dont la taille est supérieure à 0,9 $\mu$m (correspondant à une visibilité inférieure à 0,15).

Or, la taille des défauts susceptibles d'être détectés sur une plaquette s'étend dans une large gamme de dimensions, typiquement de quelques dizaines de nanomètres à quelques centaines de micromètres.

Un autre inconvénient de la technique basée sur la courbe de la figure 3 est que, pour certaines tailles de défaut (par exemple un rayon de 0,95 $\mu$m), la visibilité est nulle, c'est-à-dire qu'aucune bouffée Doppler ne se produit. Par conséquent, un défaut de cette taille ne peut être détecté.

## BREVE DESCRIPTION DE L'INVENTION

Un but de l'invention est de remédier aux inconvénients précités et de définir un système et un procédé d'inspection de plaquettes qui permettent de détecter tous les défauts éventuellement présents sur la plaquette et présentant une taille supérieure à quelques dizaines de nanomètres, et de déterminer de manière certaine la taille de chaque défaut détecté. Ce système et ce procédé doivent en outre présenter une dynamique de détection améliorée par rapport aux systèmes et procédés existants, c'est-à-dire une plus grande capacité à détecter un grand nombre de défauts et d'évaluer leur taille dans un temps réduit sur une large plage de taille de défauts.

Conformément à l'invention, il est proposé un procédé d'inspection d'une plaquette pour l'électronique, l'optique ou l'optoélectronique selon la revendication 1.

De manière particulièrement avantageuse, l'obtention d'une information sur la taille du défaut comprend :

- le calcul de la visibilité du défaut dans chaque volume de mesure,
- pour chaque volume de mesure, à partir d'une courbe de référence de la visibilité en fonction de la taille du défaut pour la distance interfranges respective, la détermination d'une ou plusieurs tailles possibles pour le défaut.

De préférence, ledit procédé comprend le filtrage du signal avec un filtre passe-bande dont la bande passante intègre la fréquence Doppler associée à chaque volume de mesure.

Selon un mode de réalisation, lesdits volumes de mesure sont au moins en partie superposés.

Selon un autre mode de réalisation, lesdits volumes de mesure se succèdent le long de la trajectoire de rotation de la plaquette.

De manière particulièrement avantageuse, le procédé comprend en outre un déplacement radial desdits volumes de mesure par rapport à la plaquette.

En règle générale, les franges de chaque volume de mesure sont orientées transversalement à la trajectoire de rotation de la plaquette.

Selon un mode de réalisation particulièrement avantageux, le dispositif interférométrique est un dispositif optique intégré comprenant un guide de lumière dont l'entrée est couplée à la source lumineuse et qui se divise en deux paires de branches dont la sortie est orientée pour former un volume de mesure respectif à l'intersection des deux faisceaux de chaque paire.

Selon une forme d'exécution de l'invention, la plaquette est au moins partiellement transparente vis-à-vis de la longueur d'onde de la source lumineuse et chaque volume de mesure s'étend dans une région de la plaquette présentant une épaisseur inférieure à l'épaisseur de ladite plaquette.

Un autre objet concerne un système d'inspection de plaquettes pour l'électronique, l'optique ou l'optoélectronique selon la revendication 10.

Selon une forme d'exécution avantageuse, ledit système comprend une unique source lumineuse et un unique dispositif interférométrique pour former tous les volumes de mesure.

Selon un mode de réalisation préféré, lequel le dispositif interférométrique se présente sous la forme d'un dispositif optique intégré comprenant un guide de lumière dont l'entrée est couplée à la source lumineuse et qui se divise en deux paires de branches dont la sortie est orientée pour former un volume de mesure respectif à l'intersection des deux faisceaux de chaque paire.

De manière particulièrement avantageuse, ledit système comprend en outre un bras pour déplacer le dispositif interférométrique et le dispositif de collecte du faisceau diffusé en translation dans une direction radiale.

## BREVE DESCRIPTION DES DESSINS

D'autres caractéristiques et avantages de l'invention ressortiront de la description détaillée qui va suivre, en référence aux dessins annexés sur lesquels :

- la figure 1 est un schéma de principe d'un système d'inspection basé sur la vélocimétrie laser à effet Doppler, tel que décrit dans le document WO 2009/112704,
- la figure 2 illustre un exemple de bouffée Doppler,
- la figure 3 est un diagramme illustrant la visibilité (grandeur sans unité) d'un défaut assimilé à une sphère en fonction de sa taille (en l'occurrence le rayon de la sphère exprimé en micromètres),
- la figure 4 est un schéma de principe du système d'inspection selon un mode de réalisation de l'invention,
- les figures 5A et 5B sont des schémas de principe du dispositif interférométrique selon deux modes de réalisation l'invention,
- la figure 6 est un diagramme illustrant la visibilité (sans unité) d'un défaut assimilé à une sphère en fonction de sa taille (rayon de la sphère en $\mu$m), pour un système d'inspection selon l'invention,
- la figure 7 illustre le principe de détection de défauts mettant en oeuvre un nombre N supérieur ou égal à deux de volumes de mesure.

Pour faciliter la lecture des figures, celles-ci ne sont pas nécessairement réalisées à l'échelle.

## DESCRIPTION DETAILLEE DE MODES DE REALISATION DE L'INVENTION

On s'intéresse dans la présente invention à toute plaquette destinée à être utilisée dans le domaine de l'électronique, de l'optique ou de l'optoélectronique. En particulier, la plaquette peut comprendre au moins l'un des matériaux suivants : Si, Ge, GaN, SiC, verre, Quartz, Saphir, GaAs (liste non limitative).

Par ailleurs, le matériau de la plaquette peut être ou non au moins partiellement transparent à la longueur d'onde de la source lumineuse du système d'inspection. En effet, selon une forme d'exécution particulièrement avantageuse qui sera décrite en détail plus bas, le système d'inspection procure une profondeur de champ contrôlée permettant de maîtriser la position du volume de mesure par rapport à la plaquette, en faisant en sorte que la région de la plaquette dans laquelle s'étend le volume de mesure présente une épaisseur inférieure à l'épaisseur de la plaquette. On assure ainsi que les défauts détectés se trouvent sur la surface à inspecter ou à son proche voisinage, et non sur la surface opposée.

Pour permettre la détermination non ambiguë de la taille d'un défaut détecté et rendre chaque défaut visible quelle que soit sa taille dans une gamme de quelques dizaine de nanomètres à quelques centaines de micromètres, l'invention propose de former au moins deux volumes de mesure contenant des franges d'interférences et présentant chacun une distance interfranges différente.

Les volumes de mesure sont agencés l'un par rapport à l'autre de telle sorte qu'un défaut de la plaquette passe dans chacun des volumes de mesure et génère, le cas échéant, une bouffée Doppler respective.

La figure 4 est un schéma de principe d'un système d'inspection 1 mettant en oeuvre de tels volumes de mesure.

Le système comprend un support 10 destiné à recevoir une plaquette 2 à inspecter et à l'entraîner en rotation autour d'un axe de symétrie X de la plaquette perpendiculaire à une surface principale S de ladite plaquette. En général, la plaquette est de forme circulaire mais l'invention peut s'appliquer à toute autre forme.

La plaquette 2 est maintenue sur le support 10 par tout moyen approprié, tel que des moyens électrostatiques, des moyens mécaniques, etc.

Le mécanisme de mise en rotation du support est connu en lui-même et ne sera donc pas décrit de manière détaillée.

Le support 10 comprend un ou plusieurs encodeurs (non illustrés) permettant de connaître à chaque instant la position angulaire de la plaquette.

Le système d'inspection 1 comprend en outre une source lumineuse 20.

La source lumineuse 20 est typiquement un laser DFB (acronyme du terme anglo-saxon « Distributed Feed Back »).

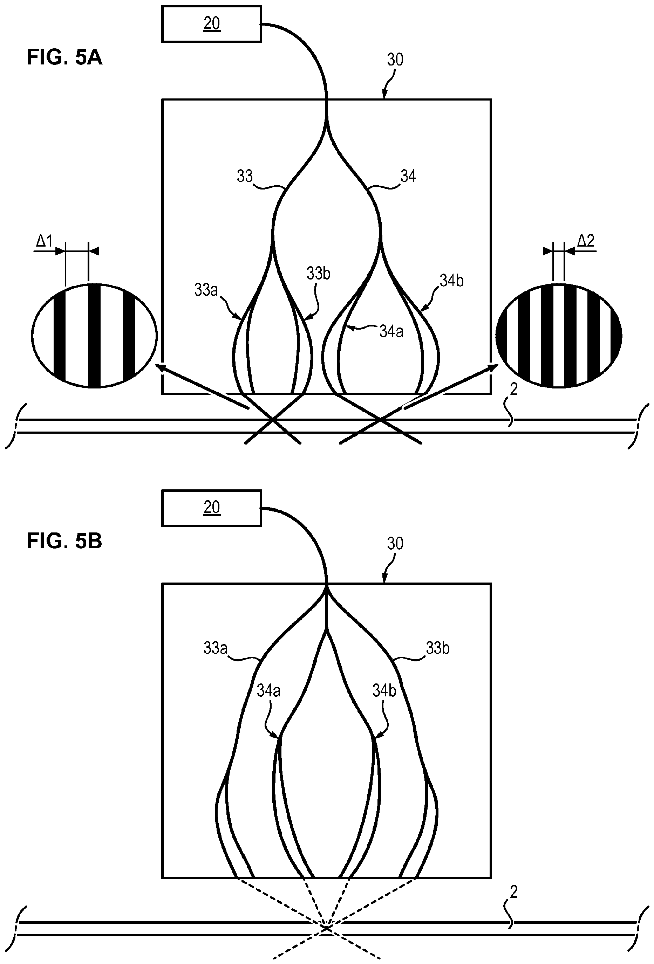

La source lumineuse est couplée à un dispositif interférométrique 30 qui sera décrit en détail en référence à la figure 5.

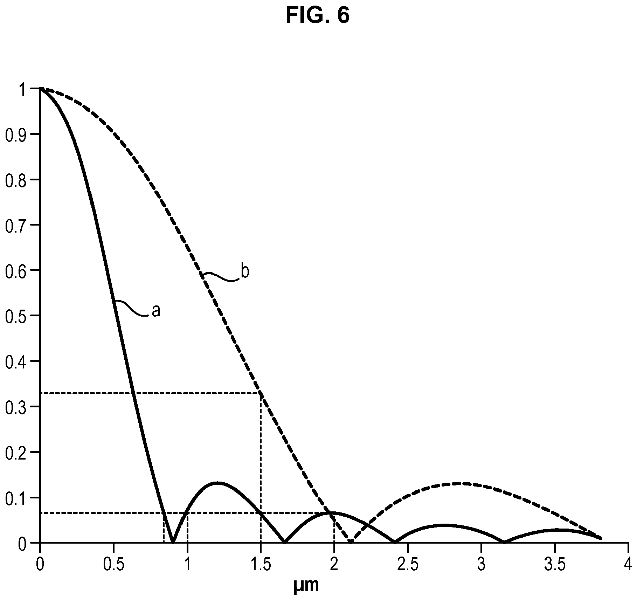

Le dispositif interférométrique 30 est conçu pour former aux moins deux volumes de mesure (dont un seul est schématisé sur la figure 4 sous la référence V) présentant des distances interfranges différentes. Ces volumes de mesure pourront être totalement ou partiellement dans un même espace. Comme cela sera expliqué plus bas en référence à la figure 6, les distances interfranges sont choisies pour que les courbes de visibilité associées à chacun de ces volumes de mesure soient suffisamment différentes l'une de l'autre pour qu'un défaut non visible dans l'un des volumes de mesure soit visible dans l'autre volume de mesure, et pour lever les éventuelles ambiguïtés concernant la taille des défauts détectés.

Il est envisageable que le système d'inspection comprenne plusieurs dispositifs interférométriques couplés chacun à une source lumineuse pour former un volume de mesure respectif, mais ce mode de réalisation est moins avantageux en termes d'encombrement et de coût. Par conséquent, de manière préférée, le système d'inspection comprend une unique source lumineuse et un unique dispositif interférométrique adapté pour former les différents volumes de mesure.

Le système d'inspection comprend par ailleurs un dispositif 40 de collecte de la lumière rétro-diffusée par la surface de la plaquette. Ce dispositif 40 peut comprendre une fibre optique de préférence de grand diamètre de coeur (c'est-à-dire typiquement entre 100 et 1000 $\mu$m de diamètre), dont l'entrée est agencée en regard de la surface de la plaquette, à proximité des volumes de mesure, et dont la sortie est couplée à un dispositif 50 d'acquisition de la lumière collectée pour émettre un signal électrique représentant la variation de l'intensité lumineuse de la lumière collectée en fonction du temps. Ledit dispositif 50 comprend typiquement un photodétecteur.

De préférence, le dispositif interférométrique 30 et le dispositif 40 de collecte de la lumière rétro-diffusée sont rigidement solidaires l'un de l'autre. En effet, l'entrée du dispositif de collecte 40 doit être positionnée de manière appropriée par rapport aux volumes de mesure pour recevoir la lumière rétro-diffusée par la plaquette.

Enfin, le système d'inspection 1 comprend un dispositif 60 de traitement configuré pour détecter, dans ledit signal, une composante fréquentielle correspondant à la fréquence Doppler.

Le dispositif de traitement 60 est avantageusement couplé à une interface (non illustrée) permettant à un utilisateur d'accéder aux résultats afin notamment de les visualiser, de les enregistrer et/ou de les imprimer.

Dans le cas où la plaquette est au moins partiellement transparente vis-à-vis de la longueur d'onde de la source lumineuse, on fait en sorte que la région dans laquelle s'étend chaque volume de mesure présente une épaisseur inférieure à celle de la plaquette. L'épaisseur de ladite région est de préférence inférieure ou égale à 90% de l'épaisseur de la plaquette. Par exemple, pour une plaquette de 500 $\mu$m à 1 mm d'épaisseur, on fait en sorte que les volumes de mesure s'étendent dans une région de la plaquette présentant une épaisseur inférieure ou égale à 100 μm. La dimension du volume de mesure est caractéristique du dispositif interférométrique et est définie par l'angle entre les deux branches du guide de lumière dans lesquelles se propage le faisceau lumineux émis par la source et par l'ouverture numérique desdits branches.

On notera à cet égard que les systèmes d'inspection présents actuellement sur le marché ne permettent pas d'inspecter de manière satisfaisante des plaquettes transparentes.

En effet, dans le cas des systèmes basés sur la technique d'inspection en champ sombre (« dark field » selon la terminologie anglo-saxonne), le faisceau incident traverse l'épaisseur de la plaquette et tout défaut, qu'il soit présent sur la surface à inspecter, sur la surface opposée ou dans l'épaisseur du substrat, génère une lumière diffusée. Il n'est donc pas possible, avec un tel système, de savoir si chaque défaut détecté se trouve sur la surface à inspecter ou non.

Par ailleurs, la société KLA-Tencor propose un système d'inspection de plaquettes transparentes dénommé Candela™, de type illumination dark field et détection confocale . Cependant, ce système est particulièrement difficile à mettre au point du fait de la précision de positionnement requise pour la détection confocale, et ne fournit donc pas des résultats répétables.

Le système mis en oeuvre dans l'invention s'affranchit des contraintes liées à la technique « dark field » et à la technique de détection confocale en détectant les défauts par une signature fréquentielle, qui ne peut être émise que par des défauts traversant un volume de mesure. Dans un tel système, le positionnement du dispositif interférométrique doit donc être ajusté précisément par rapport à la surface de la plaquette à inspecter, mais le dispositif de collecte de la lumière rétro-diffusée ne requiert pas une aussi grande précision de positionnement puisque c'est par la fréquence Doppler qu'est effectuée la restriction du volume de mesure et donc la détection.

Par ailleurs, pour inspecter des plaquettes transparentes, on choisit de préférence, pour réaliser le dispositif interférométrique, un dispositif optique intégré tel que décrit plus bas. Un tel dispositif permet en effet de contrôler la profondeur de champ du système d'inspection. D'autre part, la mesure de taille par un calcul de visibilité est indépendante de la position du défaut dans le volume de mesure.

Pour inspecter une plaquette, on met en place ladite plaquette 2 sur le support 10 et l'on entraîne le support en rotation à une vitesse angulaire ω contrôlée. Grâce aux encodeurs présents sur le support 10, on connaît à chaque instant la position angulaire d'un point donné de la plaquette. La vitesse de rotation de la plaquette est typiquement de l'ordre de 5000 tours/min.

Dans le système d'inspection 1, le dispositif interférométrique 30 est agencé en regard d'une surface principale de la plaquette 2, sur un bras (non illustré) adapté pour déplacer ledit dispositif 30 dans une direction radiale. Ainsi, compte tenu de la rotation de la plaquette, on peut balayer successivement l'ensemble de la surface de la plaquette avec les volumes de mesure en translatant radialement le dispositif interférométrique ainsi que le dispositif de collecte de la lumière rétro-diffusée.

Les deux volumes de mesure sont formés du même côté de la plaquette, pour faire en sorte qu'un défaut passe dans tous les volumes de mesure. Les franges d'interférences de chaque volume de mesure sont orientées transversalement par rapport à la trajectoire de rotation de la plaquette, de sorte à être traversées par les défauts. L'inclinaison entre les franges et la trajectoire de rotation de la plaquette peut être perpendiculaire ou selon un autre angle non nul.

Selon le principe de la méthode de W.M. Farmer citée plus haut, on calcule, pour chaque volume de mesure, la visibilité d'un défaut détecté par la formule :

$$\frac{I_{max} - I_{min}}{I_{max} + I_{min} - 2 * Offset}.$$

où Imax et Imin (en V) définissent respectivement la tension maximale et la tension minimale définissant le pic de la bouffée Doppler, et Offset (en V) est le décalage entre la valeur moyenne du signal et l'axe des abscisses correspondant à une tension électrique nulle (cf. figure 2). Ce décalage, qui n'apparaît pas dans la formule de W.M. Farmer, est lié aux conditions de mesure et tient compte du fait que, même en l'absence de défaut, une faible quantité de lumière diffusée par la surface peut être détectée.

On enregistre par ailleurs dans une mémoire du dispositif de traitement une pluralité de courbes de référence du type de celle de la figure 3, chaque courbe de référence définissant la visibilité d'un défaut dans un volume de mesure respectif en fonction de la taille du défaut.

Dans un mode de réalisation de l'invention, les volumes de mesure se succèdent le long de la trajectoire de rotation de la plaquette, à une même distance radiale de l'axe de rotation de la plaquette. Ainsi, les défauts traversent successivement les différents volumes de mesure au cours de la rotation de la plaquette.

Selon un autre mode de réalisation de l'invention, les volumes de mesure sont au moins en partie superposés. En effet, sous réserve de mettre en oeuvre un filtrage passe-bande intégrant la fréquence Doppler associée à chaque distance interfranges et donc à chaque volume de mesure, le signal émis par le photodétecteur contient uniquement les informations liées à ces volumes de mesure et permet de les distinguer. Par « intégrant » on entend ici que la bande passante du filtre comprend la fréquence Doppler et une faible gamme de fréquence autour de cette fréquence Doppler.

Les figures 5A et 5B sont des schémas de principe de deux modes de réalisation d'un dispositif interférométrique permettant de former deux volumes de mesure contenant des franges d'interférences et présentant chacun une distance interfranges différente. Dans le cas de la figure 5A, les volumes de mesure sont adjacents ; dans le cas de la figure 5B, les volumes de mesure sont au moins en partie superposés.

Ce dispositif 30 comprend un guide de lumière 31 dont l'entrée 32 est couplée à la source lumineuse 20 et comprenant deux branches principales 33, 34 symétriques pour diviser le faisceau issu de la source lumineuse en deux faisceaux incidents.

Chaque branche 33, 34 se divise elle-même en deux branches secondaires symétriques 33a, 33b et 34a, 34b respectivement.

A son extrémité, chaque branche secondaire présente une portion élargie destinée à élargir le faisceau tout en lui conservant un profil gaussien.

A la sortie du guide de lumière, les branches secondaires de chaque paire sont orientées l'une par rapport à l'autre de sorte à former, à l'intersection entre les deux faisceaux, un volume de mesure contenant des franges d'interférences parallèles. Comme schématisé sur la figure 5A, la paire 33a, 33b forme un volume de mesure dont la distance interfranges présente une valeur $\Delta 1$ et la paire 34a, 34b forme un volume de mesure dont la distance interfranges présente une valeur $\Delta 2$ différente de $\Delta 1$.

Le dispositif de la figure 5B obéit au même principe que celui de la figure 5A mais les franges n'ont pas été représentées pour simplifier la figure. Dans ce mode de réalisation, les différentes branches sont imbriquées symétriquement pour que les volumes de mesure créés à la sortie desdites branches coïncident sensiblement.

De manière particulièrement avantageuse, le dispositif interférométrique se présente sous la forme d'un capteur intégré constitué d'une seule pièce et assurant à la fois la séparation du faisceau émis par la source lumineuse et la transmission des paires de branches du faisceau pour former les volumes d'interférences à la sortie du capteur. On rappelle qu'un dispositif optique intégré est un dispositif optique fabriqué par des techniques de microélectronique.

L'article « Integrated Laser Doppler Velocimeter for Fluid Velocity and Wall Friction Measurements » de P. Lemaitre-Auger et al. décrit un tel capteur (qui comporte en l'occurrence une seule branche principale et deux branches secondaires, de sorte à former un seul volume de mesure). Une tel capteur est fabriqué notamment par la société A2 Photonic Sensor et commercialisé sous la référence I-LDA™.

Le même procédé de fabrication que celui décrit dans l'article précité peut être mis en oeuvre pour intégrer au sein du capteur plusieurs guides de lumière pour former plusieurs volumes de mesure.

A titre d'exemple, le dispositif optique intégré peut être fabriqué par échange d'ions sur un substrat de verre. Ce procédé comprend d'une manière générale :

- la fourniture d'un substrat de verre,

- le dépôt d'une couche de masquage métallique sur ledit substrat de verre,

- le dépôt d'une couche polymère sur la couche métallique,

- le transfert par photolithographie d'un motif définissant la forme du guide de lumière sur la couche polymère,

- la gravure chimique de la couche de masquage métallique à l'aide d'un procédé chimique dans les zones laissées exposées par le masque polymère,

- la suppression du masque polymère,

- l'immersion du substrat recouvert de la couche de masquage métallique gravée dans un bain d'ions (par exemple un bain de nitrate de potassium),

- l'échange d'ions présents dans le bain (par exemple des ions potassium) et d'ions contenus dans le verre (par exemple des ions sodium) au travers des zones du substrat non recouvertes par la couche de masquage métallique, celle-ci bloquant le passage des ions.

En raison de la différence de taille entre les ions présents dans le bain et les ions présents dans le verre, l'échange d'ions génère dans le substrat de verre des contraintes mécaniques locales qui augmentent l'indice de réfraction du verre. On obtient ainsi le guide de lumière mentionné plus haut.

On retire ensuite la couche de masquage et l'on dépose éventuellement une couche protectrice, par exemple de $SiO_2$. Enfin, on découpe les bords du substrat et on les polit finement.

Il existe d'autres procédés de fabrication de dispositifs optiques intégrés et l'homme du métier pourra choisir parmi les technologies de microélectronique à sa disposition pour concevoir le dispositif optique intégré.

Eventuellement, le dispositif optique intégré peut être associé en outre à une fibre optique permettant de collecter la lumière rétro-diffusée.

Un avantage de ce dispositif intégré est sa robustesse et sa stabilité. En particulier, contrairement à un système réalisé par d'autres techniques telles que la micro optique ou les fibres optiques, la compacité du dispositif intégré et l'intégration des différents composants le rendent insensible aux vibrations et aux gradients de température.

De manière avantageuse, lorsque l'on souhaite inspecter des plaquettes au moins partiellement transparentes à la longueur d'onde de la source lumineuse, on fait en sorte que l'épaisseur de la région de la plaquette dans laquelle s'étend le volume de mesure soit inférieure à l'épaisseur de la plaquette (cette région incluant une portion de la surface à inspecter). L'épaisseur de ladite région est de préférence inférieure ou égale à 90% de l'épaisseur de la plaquette. Par exemple, pour une plaquette de 500 $\mu$m à 1 mm d'épaisseur, on fait en sorte que le volume de mesure s'étende dans une région de la plaquette présentant une épaisseur inférieure ou égale à 100 $\mu$m. La dimension du volume de mesure est caractéristique du dispositif interférométrique et est définie par l'angle entre les deux branches du guide de lumière dans lesquelles se propage le faisceau lumineux émis par la source et par l'ouverture numérique desdits branches. Ces caractéristiques sont donc figées lors de la fabrication du dispositif optique intégré, ce qui permet de garantir une bonne maîtrise des performances du système lors de sa production en série.

Ainsi, il est possible de limiter ce volume de mesure à la surface de la plaquette ou à une région du voisinage de ladite surface. On assure ainsi que les défauts détectés se trouvent sur la surface à inspecter ou à son proche voisinage, et non sur la surface opposée de la plaquette.

Un dispositif optique intégré présente un avantage supplémentaire dans ce contexte, dans la mesure où sa stabilité permet d'éviter une dérive de la profondeur de champ. Le contrôle de la profondeur de champ permis par le dispositif intégré facilite donc l'inspection de plaquettes transparentes par vélocimétrie laser à effet Doppler.

On notera que, par contraste, le contrôle de la profondeur de champ revêt une importance moins grande pour l'inspection d'une plaquette opaque dans la mesure où, le volume de mesure ne pénétrant pas dans l'épaisseur d'une telle plaquette, il suffit qu'une partie de la surface de la plaquette passe dans le volume de mesure pour permettre l'inspection de ladite surface.

Comme indiqué dans l'article précité, la distance interfranges dépend de la longueur d'onde de la source lumineuse, de l'indice optique du guide de lumière et de l'angle entre les deux branches secondaires. Pour une longueur d'onde donnée de la source lumineuse, la distance interfranges est donc figée lors de la fabrication du dispositif optique intégré.

La figure 6 présente deux exemples de courbes de visibilité en fonction de la taille du défaut pour deux distances interfranges différentes.

La courbe (a) correspond sensiblement à la courbe de la figure 3.

On observe que la courbe (b) présente moins de « rebonds » correspondant à une visibilité nulle que la courbe (a), et que lesdits points de visibilité nulle ne coïncident pas avec les points de visibilité nulle de la courbe (a).

Ainsi, si un défaut présente une visibilité nulle dans le volume de mesure correspondant à la courbe (a), il n'est pas détectable par l'intermédiaire de la courbe (a) ; en revanche, comme il possède une visibilité non nulle dans le volume de mesure correspondant à la courbe (b), il est détectable par l'intermédiaire de ladite courbe (b).

Par exemple, un défaut de 1,7 μm de rayon présente une visibilité nulle sur la courbe (a) mais une visibilité d'environ 0,22 sur la courbe (b) et sera donc détectable sur la courbe (b).

Par ailleurs, ce décalage des courbes de visibilité permet de lever les ambiguïtés sur la taille des défauts détectés en recoupant les informations fournies par les deux courbes. En effet, en choisissant des courbes de visibilité suffisamment distantes l'une de l'autre, une visibilité correspondant à plusieurs tailles de défauts possibles sur l'une des courbes ne correspondra qu'à une taille de défaut sur l'autre courbe.

Par exemple, un défaut de 1,5 μm présente, sur la courbe (a), une visibilité de 0,07. Or, une visibilité de 0,07 correspond, sur la courbe (a), à quatre tailles de défaut : 0,8 μm, 1 μm, 1,5 μm et 2 μm ; cette seule valeur de visibilité ne permet donc pas de conclure sur la taille du défaut détecté. En revanche, ce même défaut de 1,5 μm de rayon présente, sur la courbe (b), une visibilité de 0,33. Par conséquent, la connaissance des visibilités de 0,07 et 0,33 permet de conclure de manière non ambigüe que le rayon du défaut détecté est de 1,5 μm.

L'homme du métier est à même de déterminer la distance interfranges de chaque volume de mesure pour permettre la détermination de la taille d'un défaut dans toute l'étendue de taille à détecter. En se basant sur des courbes du type de celle de la figure 3, qui peuvent être obtenues par simulation selon la méthode décrite par W.M. Farmer, l'homme du métier cherchera à avoir une visibilité suffisamment grande pour chaque volume de mesure et éviter les cas où la combinaison des informations collectées à partir de chaque volume de mesure puisse correspondre à plusieurs tailles de défauts.

Bien que les modes de réalisation aient été décrits jusqu'ici avec deux volumes de mesure présentant des distances interfranges distinctes, l'invention peut plus généralement être mise en oeuvre avec un nombre entier N supérieur ou égal à deux de volumes de mesure présentant chacun une distance interfranges spécifique. Avec trois volumes de mesure ou davantage, on augmente en effet encore la précision de détermination de la taille des défauts.

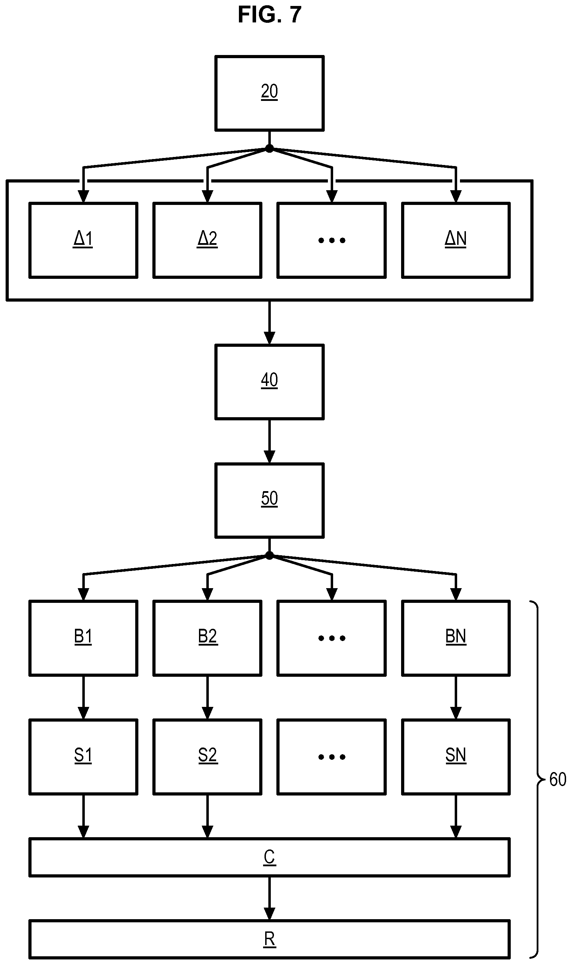

La figure 7 est un logigramme illustrant la chaîne de détection des défauts avec un nombre N de volumes de mesure supérieur à deux.

La source lumineuse 20 est couplée à l'entrée du dispositif interférométrique qui comprend N paires de branches secondaires, chaque paire étant conçue de sorte à présenter une distance interfranges Δ1, Δ2, ..., ΔN différente.

Le dispositif 40 de collecte de la lumière rétrodiffusée est commun à l'ensemble des volumes de mesure, de même que le dispositif 50 d'acquisition et le dispositif 60 de traitement.

Dans le dispositif 60 de traitement, le signal fourni par le dispositif 50 d'acquisition est filtré par N filtres passe-bande présentant chacun une bande passante B1, B2, ... BN différente, intégrant la fréquence Doppler associée à une distance interfrange respective Δ1, Δ2, ..., ΔN.

Le signal filtré fournit par conséquent N informations S1, S2, ... SN sur la taille des défauts détectés. Dans le cas où un défaut n'est pas visible dans l'un des volumes de mesure, l'information correspondante est une absence de défaut. Dans le cas où un défaut présente une visibilité associée à différentes tailles possibles, l'information correspondante est l'ensemble des tailles possibles.

L'ensemble des informations S1, S2, ..., SN est alors combiné pour permettre, par recoupement, la détermination non ambigüe de la taille de chaque défaut détecté (étape schématisée par le bloc C).

Le dispositif de détection fournit alors un rapport R sur les défauts détectés, indiquant la taille et la position de chaque défaut.

## REFERENCES

WO 2009/112704
WO 02/39099
Measurement of Particle Size, Number Density, and Velocity Using a Laser Interferometer, W.M. Farmer, Applied Optics, Vol. 11, No. 11, Nov. 1972, pp. 2603-2612
Integrated Laser Doppler Velocimeter for Fluid Velocity and Wall Friction Measurements, P. Lemaitre-Auger, A. Cartellier, P. Benech et Schanen Duport, Sensors, 2002, Proceedings of IEEE (Vol:1), pp. 78-82

## Revendications

**1.** Procédé d'inspection d'une plaquette (2) pour l'électronique, l'optique ou l'optoélectronique, comprenant :

- la mise en rotation de la plaquette (2) autour d'un axe (X) de symétrie perpendiculaire à une surface principale (S) de ladite plaquette,
- l'émission, à partir d'au moins une source lumineuse (20) couplée à un dispositif interférométrique (30), d'au moins deux paires de faisceaux lumineux cohérents incidents, chaque paire étant agencée pour former, à l'intersection entre les deux faisceaux, un volume de mesure respectif contenant des franges d'interférences présentant une distance interfranges différente de celle d'un autre volume de mesure, au moins une partie de la surface principale (S) de la plaquette passant dans chacun desdits volumes de mesure au cours de la rotation de la plaquette,
- la collecte d'au moins une portion de la lumière diffusée par ladite partie de la surface de la plaquette,
- l'acquisition de la lumière collectée et l'émission d'un signal électrique représentant la variation de l'intensité lumineuse de la lumière collectée en fonction du temps,

- la détection, dans ledit signal, d'une composante fréquentielle dans la variation de l'intensité lumineuse de ladite lumière collectée, ladite fréquence étant la signature temporelle du passage d'un défaut dans un volume de mesure respectif,
- pour chaque signature détectée, la détermination d'un paramètre, dit visibilité du défaut, dépendant de la distance interfranges du volume de mesure respectif et de la taille du défaut et donné par la formule suivante, déterminée à partir d'un signal Doppler dû au passage d'un défaut dans le volume de mesure et exprimé sous la forme d'une tension électrique en fonction du temps :

$$\frac{I_{max} - I_{min}}{I_{max} + I_{min} - 2 * Offset}$$

où Imax et Imin définissent respectivement la tension électrique maximale et la tension électrique minimale définissant le pic dudit signal Doppler et Offset est le décalage entre la valeur moyenne du signal Doppler et un axe correspondant à une tension électrique nulle,
- à partir de la visibilité déterminée pour chaque volume de mesure, l'obtention d'une information respective sur la taille dudit défaut,
- le recoupement des informations obtenues pour chaque volume de mesure pour déterminer la taille du défaut.

**2.** Procédé selon la revendication 1, dans lequel l'obtention d'une information sur la taille du défaut comprend :

- le calcul de la visibilité du défaut dans chaque volume de mesure,
- pour chaque volume de mesure, à partir d'une courbe de référence de la visibilité en fonction de la taille du défaut pour la distance interfranges respective, la détermination d'une ou plusieurs tailles possibles pour le défaut.

**3.** Procédé selon l'une des revendications 1 ou 2, comprenant le filtrage du signal avec un filtre passe-bande dont la bande passante intègre la fréquence Doppler associée à chaque volume de mesure.

**4.** Procédé selon l'une des revendications 1 à 3, dans lequel lesdits volumes de mesure sont au moins en partie superposés.

**5.** Procédé selon l'une des revendications 1 à 3, dans lequel lesdits volumes de mesure se succèdent le long de la trajectoire de rotation de la plaquette.

**6.** Procédé selon l'une des revendications 1 à 5, comprenant un déplacement radial desdits volumes de mesure par rapport à la plaquette.

**7.** Procédé selon l'une des revendications 1 à 6, dans lequel les franges de chaque volume de mesure sont orientées transversalement à la trajectoire de rotation de la plaquette.

**8.** Procédé selon l'une des revendications 1 à 7, dans lequel le dispositif interférométrique (30) est un dispositif optique intégré comprenant un guide de lumière dont l'entrée est couplée à la source lumineuse et qui se divise en deux paires de branches dont la sortie est orientée pour former un volume de mesure respectif à l'intersection des deux faisceaux de chaque paire.

**9.** Procédé selon l'une des revendications 1 à 8, dans lequel la plaquette est au moins partiellement transparente vis-à-vis de la longueur d'onde de la source lumineuse et chaque volume de mesure s'étend dans une région de la plaquette présentant une épaisseur inférieure à l'épaisseur de ladite plaquette.

**10.** Système d'inspection de plaquettes pour l'électronique, l'optique ou l'optoélectronique, comprenant :

- un dispositif (10) d'entraînement d'une plaquette en rotation autour d'un axe de symétrie perpendiculaire à une surface principale de ladite plaquette,
- au moins une source lumineuse (20),
- au moins un dispositif interférométrique (30) couplé à la source lumineuse (20) pour diviser le faisceau émis par ladite source en deux paires de faisceaux et pour former, à l'intersection entre deux faisceaux de chaque paire, un volume de mesure respectif contenant des franges d'interférences présentant une distance interfranges différente de celle d'un autre volume de mesure.
- un dispositif (40) de collecte d'au moins une partie de la lumière diffusée par la surface de la plaquette,
- un dispositif (50) d'acquisition de la lumière collectée configuré pour émettre un signal électrique représentant la variation de l'intensité lumineuse de ladite lumière collectée en fonction du temps,
- un dispositif (60) de traitement configuré pour :

* détecter, dans ledit signal, une composante fréquentielle dans la variation de l'intensité de ladite lumière collectée, ladite fréquence étant la signature temporelle du passage d'un défaut dans un volume de mesure respectif,

* pour chaque signature détectée, la détermination d'un paramètre, dit visibilité du défaut, dépendant de la distance interfranges du volume de mesure respectif et de la taille du défaut et donné par la formule suivante, déterminée à partir d'un signal Doppler dû au passage d'un défaut dans le volume de mesure et exprimé sous la forme d'une tension électrique en fonction du temps :

$$\frac{I_{max} - I_{min}}{I_{max} + I_{min} - 2 * Offset}$$

où Imax et Imin définissent respectivement la tension électrique maximale et la tension électrique minimale définissant le pic dudit signal Doppler et Offset est le décalage entre la valeur moyenne du signal Doppler et un axe correspondant à une tension électrique nulle,

* obtenir, à partir de la visibilité déterminée pour chaque volume de mesure, une information respective sur la taille dudit défaut, et
* recouper les informations obtenues pour chaque volume de mesure pour déterminer la taille du défaut.

**11.** Système selon la revendication 10, comprenant une unique source lumineuse (20) et un unique dispositif interférométrique (30) pour former tous les volumes de mesure.

**12.** Système selon l'une des revendications 10 ou 11, dans lequel le dispositif interférométrique (30) se présente sous la forme d'un dispositif optique intégré comprenant un guide de lumière dont l'entrée est couplée à la source lumineuse et qui se divise en deux paires de branches dont la sortie est orientée pour former un volume de mesure respectif à l'intersection des deux faisceaux de chaque paire.

**13.** Système selon l'une des revendications 10 à 12, comprenant en outre un bras pour déplacer le dispositif interférométrique (30) et le dispositif (40) de collecte de la lumière diffusée en translation dans une direction radiale.

**Patentansprüche**

**1.** Verfahren zur Prüfung eines Wafers (2) für die Elektronik, die Optik oder die Optoelektronik, umfassend:

- das Drehen des Wafers (2) um eine senkrecht zu einer Hauptoberfläche (S) des Wafers verlaufende Symmetrieachse (X),

- das Aussenden mindestens zweier Paare von einfallenden, kohärenten Lichtstrahlen von mindestens einer mit einer interferometrischen Vorrichtung (30) gekoppelten Lichtquelle (20), wobei jedes Paar dazu eingerichtet ist, jeweils an dem Schnittpunkt zwischen den zwei Strahlen ein Messvolumen mit Interferenzstreifen zu bilden, welche einen von dem eines anderen Messvolumens abweichenden Streifenabstand aufweisen,

wobei bei der Drehung des Wafers mindestens ein Abschnitt der Hauptoberfläche (S) des Wafers jedes Messvolumen durchläuft,

- das Sammeln mindestens eines Anteils des durch den Abschnitt der Oberfläche des Wafers gestreuten Lichts,

- die Erfassung des gesammelten Lichts und die Ausgabe eines elektrischen Signals, der die Änderung der Lichtintensität des gesammelten Lichts zeitabhängig darstellt,

- die Erkennung einer Frequenzkomponente in der Änderung der Lichtintensität des gesammelten Lichts in dem Signal, wobei die Frequenz die Zeitsignatur eines das jeweilige Messvolumen durchlaufenden Fehlers ist,

- für jede erkannte Signatur die Bestimmung eines Parameters, der sogenannten Sichtbarkeit des Fehlers, welche von dem Streifenabstand des jeweiligen Messvolumens und von der Größe des Fehlers abhängt und durch folgende Formel gegeben ist, anhand eines Dopplersignals aufgrund eines das Messvolumen durchlaufenden Fehlers bestimmt und in der Form einer elektrischen Spannung zeitabhängig ausgedrückt wird:

$$\frac{l_{max} - l_{min}}{l_{max} + l_{min} - 2 * Offset}$$

wo Imax und Imin jeweils die maximale elektrische Spannung und die minimale elektrische Spannung angeben, die die Spitze des Dopplersignals angeben, und Offset die Verschiebung zwischen dem Durchschnittswert des Dopplersignals und einer einer elektrischen Spannung gleich Null entsprechenden Achse ist,

- die Gewinnung einer jeweiligen Information über die Größe des Fehlers aus der für jedes Messvolumen bestimmten Sichtbarkeit,

- den Abgleich der für jedes Messvolumen gewonnenen Informationen zur Bestimmung der Größe des Fehlers.

2. Verfahren nach Anspruch 1, bei welchem die Gewinnung einer Information über die Größe des Fehlers umfasst:

- die Berechnung der Sichtbarkeit des Fehlers in jedem Messvolumen,
- die Bestimmung einer oder mehrerer möglichen Größen des Fehlers für jedes Messvolumen anhand einer Bezugskurve der Sichtbarkeit in Abhängigkeit von der Fehlergröße für den jeweiligen Streifenabstand.

3. Verfahren nach einem der Ansprüche 1 oder 2, umfassend das Filtern des Signals mit Hilfe eines Bandfilters, dessen Bandbreite die jedem Messvolumen zugeordneten Dopplerfrequenz integriert.

4. Verfahren nach einem der Ansprüche 1 bis 3, bei welchem die Messvolumen mindestens teilweise überlagert sind.

5. Verfahren nach einem der Ansprüche 1 bis 3, bei welchem die Messvolumen entlang der Rotationsbahn des Wafers aufeinander folgen.

6. Verfahren nach einem der Ansprüche 1 bis 5, eine radiale Verschiebung der Messvolumen im Vergleich zu dem Wafer umfassend.

7. Verfahren nach einem der Ansprüche 1 bis 6, bei welchem die Streifen jedes Messvolumens quer zur Rotationsbahn des Wafers ausgerichtet sind.

8. Verfahren nach einem der Ansprüche 1 bis 7, bei welchem die interferometrische Vorrichtung (30) eine integrierte optische Vorrichtung mit einem Lichtwellenleiter ist, dessen Eingang mit der Lichtquelle gekoppelt ist und der sich in zwei Zweigpaare teilt, deren Ausgang jeweils zur Bildung eines Messvolumens an dem Schnittpunkt der beiden Strahlen des jeweiligen Paares ausgerichtet ist.

9. Verfahren nach einem der Ansprüche 1 bis 8, bei welchem der Wafer mindestens teilweise durchsichtig in Bezug auf die Wellenlänge der Lichtquelle ist und jedes Messvolumen sich in einem Waferbereich erstreckt, der eine Dicke kleiner als die Dicke des Wafers aufweist.

10. System zur Prüfung von Wafern für die Elektronik, die Optik oder die Optoelektronik, umfassend:

- eine Vorrichtung (10) zum Versetzen eines Wafers in Drehbewegung um eine senkrecht zu einer Hauptoberfläche des Wafers verlaufende Symmetrieachse,
- mindestens eine Lichtquelle (20),
- mindestens eine interferometrische Vorrichtung (30), mit der Lichtquelle (20) derart gekoppelt, um den durch die Quelle emittierten Strahl in zwei Strahlenpaare zu teilen und um an dem Schnittpunkt zwischen zwei Strahlen jedes Paares jeweils ein Messvolumen zu bilden, das Interferenzstreifen enthält, welche einen von dem eines anderen Messvolumens abweichenden Streifenabstand aufweisen,

- eine Vorrichtung (40) zum Sammeln mindestens eines Anteils des durch die Oberfläche des Wafers gestreuten Lichts,
- eine Vorrichtung (50) zur Erfassung des gesammelten Lichts, ausgestaltet zur Ausgabe eines elektrischen, die zeitabhängige Änderung der Lichtintensität des gesammelten Lichts darstellenden Signals,
- eine Vorrichtung (60) zur Verarbeitung, dazu ausgestaltet:

   * in dem Signal eine Frequenzkomponente in der Änderung der Lichtintensität des gesammelten Lichts zu erkennen, wobei die Frequenz die Zeitsignatur eines das jeweilige Messvolumen durchlaufenden Fehlers ist,
   * für jede erkannte Signatur die Bestimmung eines Parameters, der sogenannten Sichtbarkeit des Fehlers, welche von dem Streifenabstand des jeweiligen Messvolumens und von der Größe des Fehlers abhängt und durch folgende Formel gegeben ist, anhand eines Dopplersignals aufgrund eines das Messvolumen durchlaufenden Fehlers bestimmt und in der Form einer elektrischen Spannung zeitabhängig ausgedrückt wird:

$$\frac{l_{max} - l_{min}}{l_{max} + l_{min} - 2 * Offset}$$

   wo lmax und lmin jeweils die maximale elektrische Spannung und die minimale elektrische Spannung angeben, die die Spitze des Dopplersignals angeben, und Offset die Verschiebung zwischen dem Durchschnittswert des Dopplersignals und einer einer elektrischen Spannung gleich Null entsprechenden Achse ist,
   * anhand der für jedes Messvolumen bestimmten Sichtbarkeit eine jeweilige Information über die Größe des Fehlers zu gewinnen,
   * die für jedes Messvolumen gewonnenen Informationen zur Bestimmung der Größe des Fehlers abzugleichen.

11. System nach Anspruch 10, eine einzige Lichtquelle (20) und eine einzige interferometrische Vorrichtung (30) zur Bildung aller Messvolumen umfassend.

12. System nach einem der Ansprüche 10 oder 11, bei welchem die interferometrische Vorrichtung (30) in der Form einer integrierten optischen Vorrichtung mit einem Lichtwellenleiter besteht, dessen Eingang mit der Lichtquelle gekoppelt ist und der sich in zwei Zweigpaare teilt, deren Ausgang jeweils zur Bildung eines Messvolumens an dem Knotenpunkt der beiden Strahlen des jeweiligen Paares ausgerichtet ist.

13. System nach einem der Ansprüche 10 bis 12, außerdem umfassend einen Arm zur translationsartigen Verschiebung in einer radialen Richtung der interferometrischen Vorrichtung (30) und der Vorrichtung (40) zum Sammeln des gestreuten Lichts.

## Claims

1. Method for the inspection of a wafer (2) for electronics, optics or optoelectronics, comprising:

   - rotating the wafer (2) about an axis of symmetry (X) perpendicular to a main surface (S) of said wafer,
   - emitting, from at least one light source (20) coupled with an interferometric device (30), at least two pairs of incident coherent light beams, each pair being arranged in order to form, at the intersection between the two beams, a respective measurement volume containing interference fringes having an inter-fringe distance different from that of another measurement volume,
   at least a portion of the main surface (S) of the wafer passing through each of said measurement volumes during the rotation of the wafer,
   - collecting at least a portion of the light scattered by said part of the surface of the wafer,
   - capturing the collected light and emitting an electrical signal representing the variation in the light intensity of the collected light as a function of time,
   - detecting, in said signal, a frequency component in the variation of the light intensity of said collected light, said frequency being the time signature of the passage of a defect through a respective measurement volume,
   - for each detected signature, determining a parameter, called visibility of the defect, dependent on the inter-fringe distance of the respective measurement volume and the size of the defect and given by the following formula, determined on the basis of a Doppler signal due to a defect passing through the measurement volume and expressed in the form of an electrical voltage as a function of time:

$$\frac{I_{max} - I_{min}}{I_{max} + I_{min} - 2 * Offset}$$

where Imax and Imin define the maximum electrical voltage and the minimum electrical voltage, respectively, defining the peak of said Doppler signal and Offset is that between the mean value of the Doppler signal and an axis corresponding to a zero electrical voltage.
- on the basis of the visibility determined for each measurement volume, obtaining a respective item of information on the size of said defect,
- cross-checking the information obtained for each measurement volume in order to determine the size of the defect.

2. Method according to claim 1, in which obtaining an item of information on the size of the defect comprises:

- calculating the visibility of the defect in each measurement volume,
- for each measurement volume, on the basis of a visibility reference curve as a function of the size of the defect for the respective inter-fringe distance, determining one or more possible sizes for the defect.

3. Method according to one of claims 1 or 2, said method comprising filtering the signal with a band-pass filter the pass-band of which incorporates the Doppler frequency associated with each measurement volume.

4. Method according to one of claims 1 to 3, in which said measurement volumes are at least partially superimposed.

5. Method according to one of claims 1 to 3, in which said measurement volumes follow one another along the path of rotation of the wafer.

6. Method according to one of claims 1 to 5, comprising a radial movement of said measurement volumes with respect to the wafer.

7. Method according to one of claims 1 to 6, in which the fringes of each measurement volume are oriented transversally to the path of rotation of the wafer.

8. Method according to one of claims 1 to 7, in which the interferometric device (30) is an integrated optical device comprising a light guide the input of which is coupled with the light source and which is divided into two pairs of branches, the output of which is oriented in order to form a respective measurement volume at the intersection of the two beams of each pair.

9. Method according to one of claims 1 to 8, in which the wafer is at least partially transparent vis-à-vis the wavelength of the light source and each measurement volume extends into a region of the wafer having a thickness less than the thickness of said wafer.

10. System for inspecting wafers for electronics, optics or optoelectronics, comprising:

- a device (10) for driving a wafer in rotation about an axis of symmetry perpendicular to a main surface of said wafer,
- at least one light source (20),
- at least one interferometric device (30) coupled with the light source (20) in order to divide the beam emitted by said source into two pairs of beams and in order to form, at the intersection between two beams of each pair, a respective measurement volume containing interference fringes, having an inter-fringe distance that is different from that of another measurement volume,
- a device (40) for the collection of at least a portion of the light scattered by the surface of the wafer,
- a device (50) for capturing the collected light configured in order to emit an electrical signal representing the variation in the light intensity of said collected light as a function of time,
- a processing device (60) configured in order to:

* detect, in said signal, a frequency component in the variation of the intensity of said collected light, said frequency being the time signature of the passage of a defect through a respective measurement volume,
* for each detected signature, determine a parameter, called visibility of the defect, dependent on the inter-fringe distance of the respective measurement volume and the size of the defect, and given by the following formula, determined on the basis of a Doppler signal due to a defect passing through the measurement volume and expressed in the form of an electrical voltage as a function of time:

$$\frac{I_{max} - I_{min}}{I_{max} + I_{min} - 2 * Offset}$$

where Imax and Imin define the maximum electrical voltage and the minimum electrical voltage, respectively, defining the peak of said Doppler signal and Offset is that between the mean value of the Doppler signal and an axis corresponding to a zero electrical voltage.

\* obtain, on the basis of the visibility determined for each measurement volume, a respective item of information on the size of said defect, and

\* cross-check the information obtained for each measurement volume in order to determine the size of the defect.

11. System according to claim 10, comprising a single light source (20) and a single interferometric device (30) in order to form all the measurement volumes.

12. System according to one of claims 10 or 11, in which the interferometric device (30) is in the form of an integrated optical device comprising a light guide the input of which is coupled with the light source and which is divided into two pairs of branches, the output of which is oriented in order to form a respective measurement volume at the intersection of the two beams of each pair.

13. System according to one of claims 10 to 12, also comprising an arm for moving the interferometric device (30) and the device for the collection of scattered light (40) in translational motion in a radial direction.

# FIG. 1

**FIG. 2**

EP 3 201 609 B1

# FIG. 3

# FIG. 4

FIG. 5A

FIG. 5B

FIG. 6

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009112704 A

- WO 0239099 A

**Littérature non-brevet citée dans la description**

- **W.M. FARMER.** Measurement of Particle Size, Number Density, and Velocity Using a Laser Interferometer. *Applied Optics,* Novembre 1972, vol. 11 (11), 2603-2612

- **P. LEMAITRE-AUGER ; A. CARTELLIER ; P. BENECH ; SCHANEN DUPORT, SENSORS.** Integrated Laser Doppler Velocimeter for Fluid Velocity and Wall Friction Measurements. *Proceedings of IEEE,* 2002, vol. 1, 78-82